# EUROPEAN PATENT SPECIFICATION

(11) **EP 3 219 231 B1**
(45) Date of publication and mention of the grant of the patent: **08.09.2021**
(21) Application number: 17161561.0
(22) Date of filing: 17.03.2017
(51) Int. Cl.: A47J 36/06, A47J 37/10, A47J 37/12

(54) **FOOD COOKING APPARATUS**
LEBENSMITTELKOCHVORRICHTUNG
APPAREIL DE CUISSON DE PRODUITS ALIMENTAIRES

(30) Priority: 18.03.2016 IT UA20161819
(43) Date of publication of application: 20.09.2017
(73) Proprietor: De' Longhi Appliances S.r.l. Con Unico Socio, 31100 Treviso (IT)
(72) Inventor: DE' LONGHI, Giuseppe, 31100 Treviso (TV) (IT); FAVARETTO, Alessandro, 30031 Dolo (VE) (IT)
(74) Representative: Petraz, Gilberto Luigi

(56) References cited:
- EP-A1- 2 002 768
- EP-A1- 2 103 238
- EP-B1- 2 140 789

## Description

### FIELD OF APPLICATION

The present invention relates to an apparatus for cooking food, for example, but not solely, through its immersion in a cooking liquid, such as oil, or another fat, either alone or with aqueous substances, or for cooking with a minimum amount of cooking liquid.

The cooking apparatus, which the present invention refers to, comprises a containing body that defines the food cooking compartment, and a lid associated therewith in a removable or fixed manner.

The present invention relates also to a lid for a cooking apparatus and to a method for manufacturing said lid.

### STATE OF THE ART

Cooking apparatuses are known which comprise a containing body that defines a compartment used for inserting food inside that one wishes to heat and/cook.

Said cooking apparatuses further comprise a lid, which can be selectively opened/closed, that is intended, for instance, to obtain a cooking atmosphere inside the compartment that shall be as homogeneous as possible, to control the emission of vapors from the cooking compartment, to protect people and things from splashes possibly leaking from the compartment during cooking.

It is known to use lids that are partly or completely transparent, so as to allow, for instance, to monitor the progress of cooking the food while the lid is closed.

The patent EP-B-2.140.789 describes a lid that provides a viewing window consisting of a glass plate enclosed, through assembly, between a perimetrical frame and a counter-frame, made separately from one another, which, once they are joined and sealed, together define the lid. EP 2.103.238 discloses another example of a lid for a cooking apparatus with a transparent window.

Lids are also known which enclose the transparent window, through assembly, in a multi-layer structure defined by an upper plate made of a plastic material and a lower counter-plate made of a metallic material, for instance aluminum.

A drawback of the known solutions available on the market is represented by the fact that between the transparent window and the frames, or plates, slits and hollow spaces are formed which can cause deposits of dirt that is hard to remove.

A further drawback is given by the fact that the connection between the window and the frames, or plates, can hardly be, or be kept, perfectly tight, so that there can be some uncontrolled leaks and infiltrations of the cooking vapors. Further to that, because of a non-perfect sealing condensate and misting, which limit the visibility and also the cleanliness of the transparent window, can be formed in the course of time.

If cleaning of the window is carried out, in the interstices there may remain water or some residual cleaning liquid which can flow into the cooking liquid and hence cause undesired splashes during cooking, in particular if frying is carried out, or undesired contaminations.

An object of the present invention is to provide an improved cooking apparatus that allows to obtain an optimum sealing, also over time, between lid and cooking compartment.

Another object is to guarantee an optimum, continuing viewing of the inside of the compartment during the cooking of food.

A further object of the present invention is to allow an easy and quick cleaning of the lid without any risk of removing or ruining any parts that are printed, silk-screen printed or impressed on it, for instance on the transparent window, and/or of exposing these parts to splashes of cooking, for instance oil drops.

A further object is to provide a lid without any slits and spaces that are unreachable.

A further object is to provide a method of manufacturing a lid that facilitates the insertion of a transparent window in it.

To overcome the shortcomings of the prior art and to achieve these as well as other objects and advantages, the Applicant studied, experimented and realized the present invention.

### EXPOSITION OF THE INVENTION

The present invention is set out and characterized in the independent claims, while the dependent claims expound other features of the present invention or variants to the main idea of solution.

In accordance with the above-mentioned objects, the present invention relates to a cooking apparatus and a corresponding lid.

The cooking apparatus comprises a containing body that defines a cooking compartment for food, and a lid associated with said containing body in a fixed or removable manner and that can be selectively opened and closed to open or close the cooking compartment accordingly.

In preferred forms of embodiment of the present invention, at least one among the containing body and the lid are associated to a heating unit which forms an integrating part of the cooking apparatus itself.

In further forms of embodiment, at least one ventilation element can be associated to the containing body.

In other forms of embodiment, the cooking apparatus can comprise at least one mixing means associated to selective handling means.

According to the present invention, the lid comprises a main body made of a plastic material which defines a perimetrical support and positioning frame, and a transparent window inserted in the perimetrical frame, wherein the transparent window is obtained by injection overmoulding with the main body made of plastic material.

The transparent window is made of glass.

The transparent window is silk-screen printed at least on one side to show inscriptions, indications or graphics of various types.

In particular, with the present invention, the portion of transparent window, which has said inscriptions on at least one side, can be comprised and integrated into the perimetrical support and positioning frame. This allows to prevent said silk-screen printed inscriptions from being removed during the cleaning of the lid and/or from being covered with fat, or with splashes caused by cooking, so as to be indelible and to be preserved substantially for the entire life of the cooking apparatus.

The main body defining the perimetrical frame is advantageously, even though not necessarily, made of a heat-resistant plastic, for example PBT with glass fiber.

Advantageously, with the present invention, in only one operating step of injection overmoulding it is possible to obtain a lid comprising a transparent window that is perfectly integrated into the main body and that cannot be removed therefrom, that is inserted in the perimetrical frame in such a manner that no hollows, slits or discontinuities are formed where dirt or remains, which are hard to be reached for cleaning, can deposit.

Further to that, a lid manufactured in this way allows to overcome any possible technical limitations of the width of the transparent window, which are otherwise present with operations of assembly of the transparent window to the main body made of plastic material.

According to the invention, the main body comprises at least one vapor outlet unit comprising a plurality of through holes that connect the cooking compartment with the outside environment.

Furthermore, any formation of condensate and misting is prevented, also over time, caused by losses of the sealing between perimetrical frame and transparent window.

### ILLUSTRATION OF THE DRAWINGS

These and other features of the present invention will be clear from the following description of forms of embodiment, provided by way of a nonlimiting example, with reference to the annexed drawings, in which:
- figure 1 is a sectional view of a cooking apparatus according to the present invention;
- figure 2 is an exploded view of a lid for the apparatus of figure 1;
- figure 3 is a perspective view of part of the lid of figure 2;
- figure 4 is a sectional view of figure 3;
- figure 5 is a perspective, partly sectional and exploded, view of figure 3.

To facilitate understanding, identical reference numbers were used, where possible, to identify identical common elements in the figures. It shall be understood that elements and features of a form of embodiment can be suitably incorporated in other forms of embodiment without any further specifications.

### DESCRIPTION OF FORMS OF EMBODIMENT

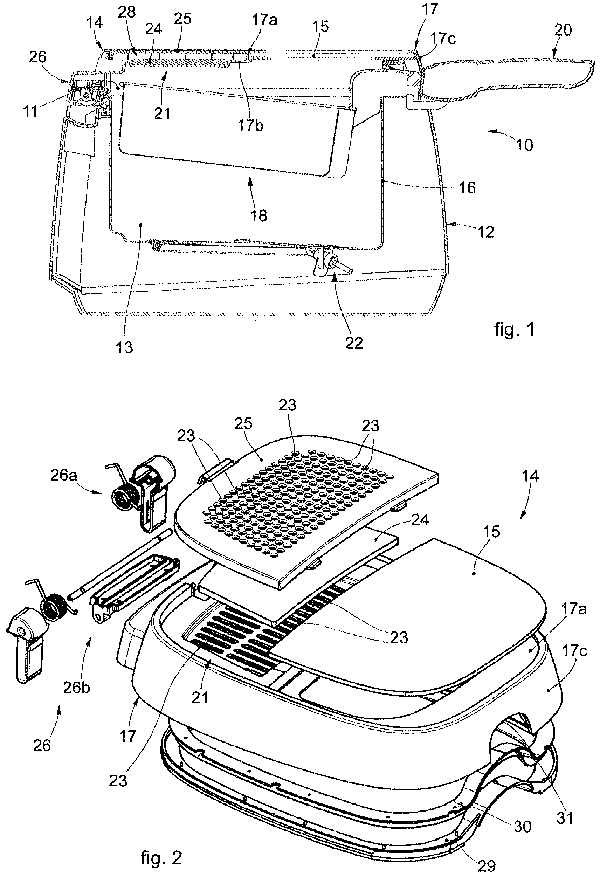

Figure 1 is used to describe exemplary forms of embodiment of a cooking apparatus 10, that can be used for cooking food.

The cooking apparatus 10 comprises at least one containing body 12 that defines the structure, a compartment 13 having an upper opening 11, a lid 14 that selectively opens/closes the upper opening 11, and at least one tank 16 suitable to contain a desired amount of cooking liquid.

Further to that, the cooking apparatus 10 can comprise a heating unit 22 designed to heat and/or cook food and associated with at least one among the containing body 12 and the lid 14; the heating unit 22, by way of example, is illustrated to be placed beneath the tank 16.

Inside the compartment 13 the cooking apparatus 10 can comprise also a basket 18 for receiving the food to be immersed in the cooking liquid and cooperating with a handle 20 for positioning and handling it inside and outside the tank 16.

The lid 14 comprises a main body, or casing, 17 made of thermoplastic material, defining a perimetrical support and positioning frame, and a transparent window 15 inserted in the perimetrical frame that allows to view at least part of the compartment 13 from the outside.

According to the invention, the transparent window 15 is obtained by injection overmoulding with the main body 17 made of plastic material, to obtain, in an advantageous manner, a single body that is completely sealed, wherein the transparent window 15 is perfectly inserted in the perimetrical frame defined by the above-mentioned main body 17.

The transparent window 15 hereby integrated into the main body 17 facilitates the cleaning of the whole lid 14, while no discontinuities, interstices, undercuts or other zones are created that are hard to be reached and that are the cause of deposits of dirt and remains.

According to the invention, the thermoplastic material with which the main body 17 is manufactured is of the type that is resistant to high temperatures, for instance PBT thermoplastic material or similar, either reinforced or non-reinforced with glass fibres, or of other type.

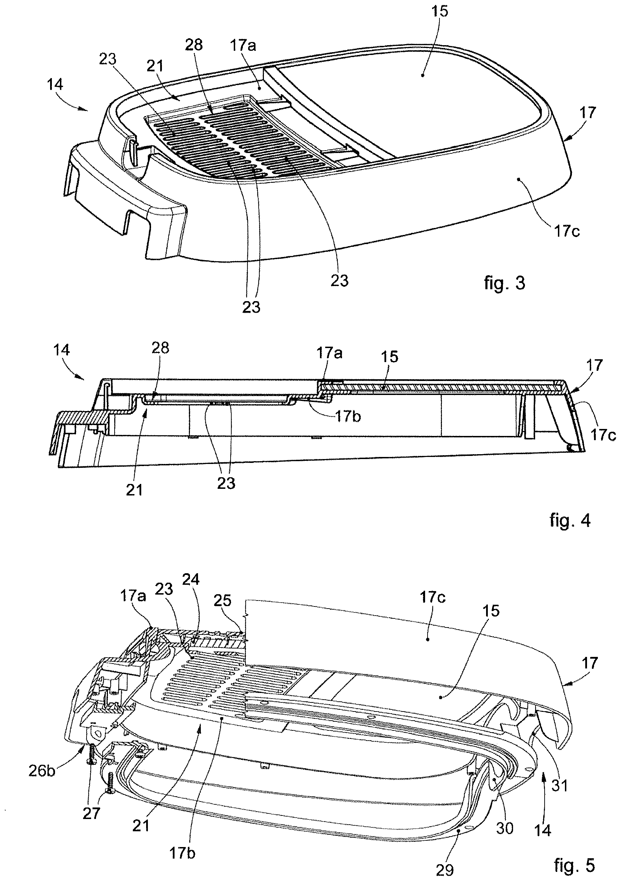

With reference to figure 4, the main body 17 comprises an upper surface 17a, a lower surface 17b and a perimetrical edge 17c that define the perimetrical support and positioning frame of the transparent window 15.

The perimetrical edge 17c is designed as being lowered with respect to the lower surface 17b, so that, when the lid 14 is closed, the perimetrical edge 17c partly encloses the containing body 12.

According to a variant of embodiment, the perimetrical edge 17c has a housing seat 31 for the handle 20 to allow handling thereof with no interferences with the lid 14, whatever relative position it takes with the latter.

The transparent window 15 according to the invention is made of glass. For instance, of tempered glass such that, in a condition of use, looks transparent and that is suitable to allow for an operation of injection overmoulding on the part of a thermoplastic material that then forms the above-mentioned perimetrical support and positioning frame.

The transparent window 15 is suitable for an inspection of the inside of the cooking apparatus 10 also when the lid 14 is closed.

According to the invention, the transparent window 15 made of glass has on at least one side and in a portion, some explanatory inscriptions, that are useful for instance to set the temperature based on the type of food to be cooked or other information for the user, decorations, or the like, made, for example, through silk-screen printing.

According to the invention, the portion of the transparent window 15 having the above-mentioned screen-printed inscriptions is comprised in the perimetrical frame of the main body 17 and totally integrated into it in a manner such as to be protected substantially for the whole useful lifetime of the cooking apparatus 10.

According to the present invention illustrated by way of example in the figures 2-5, the main body 17 comprises at least one vapor outlet unit 21.

The outlet unit 21 is advantageously manufactured during the step of moulding the lid 14 and can be made adjacent to the transparent window 15.

The outlet unit 21 has a plurality of through holes 23, for instance having an oblong, circular, oval, or similar shape, to facilitate the outlet of the cooking vapor from the compartment 13.

The lid 14, or the main body 17, can also comprise a filter 24 designed so as to allow the vapor that can be produced in the tank 16 to come out from the cooking apparatus 10 also when the lid 14 is closed.

In particular, the filter 24 can be manufactured specially to release vapor in a controlled manner, i.e. retaining some substances that remain entrapped in the filter 24 and releasing water vapor.

According to a further variant of embodiment, the outlet unit 21 can be provided with a covering element 25, that is selectively removable from the lid 14 by means of a snap-type coupling to enable replacement of the filter 24 when it exhausts its normal function.

Also the covering element 25 comprises a plurality of through holes 23 to allow the emission of the cooking vapor filtered by the filter 24, if any.

According to a variant of embodiment illustrated by way of example in figures 1 and 2, the outlet unit 21 can be designed as being lowered in relation to the lower surface 17b, and the covering element 25, once it is coupled to the main body 17, is substantially coplanar to the surface 17a.

Between the outlet unit 21 and the covering element 25 a cavity 28 is formed inside which the filter 24 can advantageously be positioned.

Selective opening/closing of the lid 14 takes place by means of a hinge 26 designed to allow pivoting of the lid 14 on the containing body 12.

According to a variant of embodiment illustrated by way of example in figure 2, the hinge 26 can comprise an element 26a fixed on the containing body 12 and an element 26b removable from the lid 14.

In particular, the removable element 26b and the lid 14 can be coupled together by means of fixing elements 27.

In this manner, advantageously, the hinge 26 and the lid 14 can be manufactured as two separate bodies, allowing an easy removal of the lid 14 from the containing body 12 to facilitate its cleaning.

According to a further variant of embodiment illustrated by way of example in figures 2 and 5, the lid 14 can comprise a frame-type element 29 to fix a gasket 30.

The frame-type element 29 and the gasket 30 are designed to follow the conformation of the lower surface 17b, in particular in correspondence with the housing seat 31.

The frame-type element 29 and the gasket 30 can be fixed to the lid 14 by means of the fixing elements 27 in correspondence with the lower surface 17b.

The gasket 30 can be designed to be complementary to the frame-type element 29 and can extend at least partly, or completely, along the frame 29.

In particular, the gasket 30 is designed to determine a sealing of the cooking apparatus 10 in correspondence with the opening 11 of the containing body 12.

According to a further variant of embodiment not illustrated in the figures, the lid 14 can provide that the gasket 30 is arranged in correspondence with the housing seat 31.

According to the invention, the lid 14 is manufactured through injection overmoulding technique by means of the use of a mold having an injection cavity that reproduces in negative the upper surface 17a, the lower surface 17b and the perimetrical edge 17c.

The method for manufacturing the lid 14 provides at least the following steps:
- stable positioning of the transparent window 15 made of glass inside the cavity of the open mold;
- closing the mold;
- injection of thermoplastic material, into the cavity of the closed mold to form a perimetrical support and positioning frame around the transparent window 15 so as to obtain integration of the plastic material of the main body 17 into the perimetrical edge of the transparent window 15;
- removal of the lid 14 from the mold after solidification of the plastic material of the main body 17 has been obtained.

It is evident that modifications and/or additions of parts can be made to the cooking apparatus 10 and to the corresponding lid 14 described heretofore, without, for this, departing from the scope of the present invention as defined by the appended claims.

## Claims

1. Cooking apparatus for food, comprising a containing body (12) that is provided with an opening (11) and defines a compartment (13), a lid (14) associated with said containing body (12) to selectively open/close said opening (11), wherein said lid (14) comprises a main body (17) made of a thermoplastic material which defines a perimetrical support and positioning frame, and a transparent window (15) made of glass inserted into the perimetrical support and positioning frame, the main body (17) comprising at least one vapor outlet unit (21) having a plurality of through holes (23),
**characterized in that** the transparent window (15) made of glass is obtained by injection overmoulding with the main body (17) made of thermoplastic material and
**in that** a portion of said transparent window (15), which has on at least one side silk-screen printed inscriptions, is comprised and integrated into the perimetrical support and positioning frame of said main body (17).

2. Apparatus as in claim 1, **characterized in that** said outlet unit (21) is formed to be lowered in relation to a lower surface (17b) of the main body (17) and a covering element (25), with which the outlet unit (21) is provided, in use, is coplanar to an upper surface (17a) of the main body (17), **and that** between said outlet unit (21) and said covering element (25) a cavity is formed (28) inside which a filter (24) can be positioned.

3. Apparatus as in any claim hereinbefore, **characterized in that** said lid (14) comprises a hinge (26) comprising an element (26a) fixed on the containing body (12) and an element (26b) removable from the lid (14).

4. Apparatus as in any claim hereinbefore, **characterized in that** said lid (14) comprises a frame-type element (29) and a gasket (30) designed to be complementary to said frame-type element (29).

5. Apparatus as in claim 4, **characterized in that** said gasket (30) is continuous along the whole perimeter of said frame-type element (29).

6. Apparatus as in claim 4, **characterized in that** said gasket (30) is arranged in correspondence with a housing seat (31) of said main body (17).

7. Lid (14) for a cooking apparatus, comprising a main body (17) made of a thermoplastic material which defines a perimetrical support and positioning frame, and a transparent window (15) made of glass inserted into said perimetrical frame, said main body (17) comprising at least one vapor outlet unit (21) having a plurality of through holes (23),
**characterized in that** said transparent window (15) made of glass is obtained by injection overmoulding with the main body (17) made of thermoplastic material, **in that** a portion of said transparent window (15), which has on at least one side silk-screen printed inscriptions, is comprised and integrated into the perimetrical support and positioning frame of said main body (17).

8. Method for manufacturing a lid for a cooking apparatus (10) as in claim 7,
**characterized in that** it provides at least the following steps:
- stable positioning of a transparent window (15) made of glass inside a cavity of an open mold;
- closing the mold;
- injection of thermoplastic material into the cavity of the closed mold to form a perimetrical support and positioning frame around the transparent window (15) so as to obtain integration of the plastic material into the perimetrical edge of the transparent window (15);
- removal of the lid thereby obtained from the mold.

## Patentansprüche

1. Kochvorrichtung für Lebensmittel, umfassend einen Behälterkörper (12), der mit einer Öffnung (11) versehen ist und ein Fach (13) umfasst, einen Deckel (14), der zu dem Behälterkörper (12) gehört, um die Öffnung (11) selektiv zu öffnen/schließen, wobei der Deckel (14) einen Hauptkörper (17) aus einem thermoplastischen Material, der einen Umfangsträger und Positionierungsrahmen definiert, und ein transparentes Fenster (15) aus Glas umfasst, das in den Umfangsträger und Positionierungsrahmen eingefügt ist, wobei der Hauptkörper (17) mindestens eine Dampfauslasseinheit (21) mit einer Mehrzahl von Durchgangslöchern (23) umfasst,
**dadurch gekennzeichnet, dass** das transparente Fenster (15) aus Glas durch Umspritzen mit dem Hauptkörper (17) aus thermoplastischem Material erhalten wird und
dass ein Abschnitt des transparenten Fensters (15), der auf mindestens einer Seite Siebdruckschriften aufweist, in dem Umfangsträger und Positionierungsrahmen des Hauptkörpers (17) enthalten und in ihn integriert ist.

2. Vorrichtung nach Anspruch 1, **dadurch gekennzeichnet, dass** die Auslasseinheit (21) so ausgebildet ist, dass sie in Bezug auf eine untere Fläche (17b) des Hauptkörpers (17) abgesenkt wird, und ein Abdeckelement (25), mit dem die Auslasseinheit (21) versehen ist, im Gebrauch koplanar zu einer oberen Fläche (17a) des Hauptkörpers (17) ist, und dass zwischen der Auslasseinheit (21) und dem Abdeckelement (25) ein Hohlraum (28) ausgebildet ist, in dem ein Filter (24) positioniert werden kann.

3. Vorrichtung nach einem der vorhergehenden Ansprüche, **dadurch gekennzeichnet, dass** der Deckel (14) ein Scharnier (26) umfasst, das ein Element (26a), das an dem Behälterkörper (12) befestigt ist, und ein Element (26b) umfasst, das von dem Deckel (14) entfernbar ist.

4. Vorrichtung nach einem der vorhergehenden Ansprüche, **dadurch gekennzeichnet, dass** der Deckel (14) ein rahmenartiges Element (29) und eine Dichtung (30) umfasst, die dazu ausgelegt ist, komplementär zum rahmenartigen Element (29) zu sein.

5. Vorrichtung nach Anspruch 4, **dadurch gekennzeichnet, dass** die Dichtung (30) entlang des gesamten Umfangs des rahmenartigen Elements (29) durchgehend ist.

6. Vorrichtung nach Anspruch 4, **dadurch gekennzeichnet, dass** die Dichtung (30) in Übereinstimmung mit einem Gehäusesitz (31) des Hauptkörpers (17) angeordnet ist.

7. Deckel (14) für eine Kochvorrichtung, umfassend einen Hauptkörper (17) aus einem thermoplastischen Material, der einen Umfangsträger und Positionierungsrahmen definiert, und ein transparentes Fenster (15) aus Glas, das in den Umfangsrahmen eingefügt ist, wobei der Hauptkörper (17) mindestens eine Dampfauslasseinheit (21) mit einer Mehrzahl von Durchgangslöchern (23) umfasst,
**dadurch gekennzeichnet, dass** das transparente Fenster (15) aus Glas durch Umspritzen mit dem Hauptkörper (17) aus thermoplastischem Material erhalten wird, dass ein Abschnitt des transparenten Fensters (15), der auf mindestens einer Seite Siebdruckschriften aufweist, in dem Umfangsträger und Positionierungsrahmen des Hauptkörpers (17) enthalten und in ihn integriert ist.

8. Verfahren zur Herstellung eines Deckels für eine Kochvorrichtung (10) nach Anspruch 7, **dadurch gekennzeichnet, dass** es mindestens die folgenden Schritte bereitstellt:
- stabiles Positionieren eines transparenten Fensters (15) aus Glas in einem Hohlraum einer offenen Form;
- Schließen der Form;
- Einspritzen von thermoplastischem Material in den Hohlraum der geschlossenen Form, um einen Umfangsträger und Positionierungsrahmen um das transparente Fenster (15) herum zu bilden, um eine Integration des Kunststoffmaterials in den Umfangsrand des transparenten Fensters (15) zu erhalten;
- Entfernen des dadurch erhaltenen Deckels aus der Form.

## Revendications

1. Appareil de cuisson pour des aliments, comprenant un corps (12) apte à contenir, qui est pourvu d'une ouverture (11) et qui définit un compartiment (13), un couvercle (14) associé audit corps (12) apte à contenir pour ouvrir/fermer sélectivement ladite ouverture (11), ledit couvercle (14) comprenant un corps principal (17) fait en un matériau thermoplastique qui définit un structure périmétrale de support et de positionnement, et une fenêtre transparente (15) faite en verre insérée dans la structure périmétrale de support et de positionnement, le corps principal (17) comprenant au moins une unité (21) de sortie de vapeur ayant une pluralité de trous traversants (23),
**caractérisé en ce que** la fenêtre transparente (15) faite en verre est obtenue par surmoulage par injection avec le corps principal (17) fait en matière thermoplastique et
**en ce qu'**une partie de ladite fenêtre transparente (15), qui présente sur au moins un côté des inscriptions sérigraphiées, est comprise et intégrée dans la structure périmétrale de support et de positionnement dudit corps principal (17).

2. Appareil selon la revendication 1, **caractérisé en ce que** ladite unité de sortie (21) est formée de façon à être abaissée par rapport à une surface inférieure (17b) du corps principal (17), et un élément de recouvrement (25), dont l'unité de sortie (21) est pourvue, en cours d'utilisation, est coplanaire à une surface supérieure (17a) du corps principal (17), et **en ce qu'**entre ladite unité de sortie (21) et ledit élément de recouvrement (25) une cavité (28) est formée, à l'intérieur de laquelle un filtre (24) peut être placé.

3. Appareil selon l'une quelconque des revendications précédentes, **caractérisé en ce que** ledit couvercle (14) comprend une charnière (26) comprenant un élément (26a) fixé sur le corps (12) apte à contenir et un élément (26b) amovible par rapport au couvercle (14).

4. Appareil selon l'une quelconque des revendications précédentes, **caractérisé en ce que** ledit couvercle (14) comprend un élément (29) de type cadre et un joint (30) conçu pour être complémentaire dudit élément (29) de type cadre.

5. Appareil selon la revendication 4, **caractérisé en ce que** ledit joint (30) est continu sur tout le périmètre dudit élément (29) de type cadre.

6. Appareil selon la revendication 4, **caractérisé en ce que** ledit joint (30) est agencé en correspondance avec un siège de logement (31) dudit corps principal (17).

7. Couvercle (14) pour un appareil de cuisson, comprenant un corps principal (17) fait en un matériau thermoplastique qui définit une structure périmétrale de support et de positionnement, et une fenêtre transparente (15) faite en verre, insérée dans ladite structure périmétrale, ledit corps principal (17) comprenant au moins une unité (21) de sortie de vapeur ayant une pluralité de trous traversants (23),
**caractérisé en ce que** ladite fenêtre transparente (15) faite en verre est obtenue par surmoulage par injection avec le corps principal (17) fait en matériau thermoplastique, **en ce qu'**une partie de ladite fenêtre transparente (15), qui présente sur au moins un côté des inscriptions sérigraphiées, est comprise et intégrée dans la structure périmétrale de support et de positionnement dudit corps principal (17).

8. Procédé de fabrication d'un couvercle pour un appareil de cuisson (10) selon la revendication 7, **caractérisé en ce qu'**il prévoit au moins les étapes suivantes :
- positionnement stable d'une fenêtre transparente (15) faite en verre à l'intérieur d'une cavité d'un moule ouvert ;
- fermeture du moule ;
- injection de matière thermoplastique dans la cavité du moule fermé pour former un structure périmétrale d'appui et de positionnement autour de la fenêtre transparente (15) de manière à obtenir l'intégration de la matière plastique dans le bord périmétrale de la fenêtre transparente (15) ;
- retrait hors du moule du couvercle ainsi obtenu.
